# EUROPÄISCHE PATENTSCHRIFT

(11) **EP 1 537 346 B1**
(45) Veröffentlichungstag und Bekanntmachung des Hinweises auf die Patenterteilung: **21.12.2005**
(21) Anmeldenummer: 03738059.9
(22) Anmeldetag: 18.06.2003
(51) Int. Cl.: F16H 55/28, F16H 55/24

(54) **ANPRESSVORRICHTUNG**
THRUST DEVICE
DISPOSITIF DE PRESSION

(30) Priorität: 08.07.2002 DE 10230602; 08.07.2002 DE 10230600; 05.06.2003 DE 10325518
(43) Veröffentlichungstag der Anmeldung: 08.06.2005
(73) Patentinhaber: ZF Lenksysteme GmbH, 73527 Schwäbisch Gmünd (DE)
(72) Erfinder: NGUYEN, Danh Luan, 73525 Schwäbisch Gmünd (DE); GRAU, Marco, 73527 Schwäbish Gmünd (DE); HETZEL, Oliver, 73550 Waldstetten (DE); BERROTH, Erich, 73577 Birkenlohe (DE)
(86) Internationale Anmeldenummer: PCT/EP2003/006429
(87) Internationale Veröffentlichungsnummer: WO 2004/005761

(56) Entgegenhaltungen:
- EP-A- 0 039 154
- EP-A- 0 463 891
- DE-A- 3 835 947
- US-A- 4 271 716

## Beschreibung

Die Erfindung betrifft eine Anpressvorrichtung, insbesondere für ein Wälzkurvengetriebe in einem Lenksystem, nach dem Oberbegriff des Anspruchs 1.

Die DE 100 51 306 A1 beschreibt ein Getriebe, insbesondere für eine Fahrzeuglenkung, mit einem als ein erstes Getriebeglied ausgebildeten Ritzel, das mit einer Antriebswelle eines Servomotors drehfest verbunden ist. Das Ritzel ist mit einem als Zahnrad ausgebildeten, zweiten Getriebeglied in Eingriff. Die Antriebswelle ist verschwenkbar in einem Festlager und einem Loslager gehalten. Das Loslager ist in einem als Getriebegehäuse ausgebildeten Gestell radialverschieblich gehalten. Das Loslager wird von einem Federungselement über einen Stützring, der als Druckstück dient, in radialer Richtung auf das Zahnrad gepresst.
Der Stützring ist in einem Langloch in dem Getriebegehäuse radialverschieblich gehalten und über das Federungselement gegen Verdrehen gesichert.

Im Betrieb des Getriebes ist eine Geräuschentwicklung durch die Anpressvorrichtung nicht auszuschließen, da das Druckstück bei einer maximalen, konstruktiv vorgegebenen Verschwenkung der Antriebswelle mit dem Getriebegehäuse auf Anschlag geht.

Die DE 38 35 947 A1, die eine Vorrichtung mit den Merkmalen des Oberbegriffs des Anspruchs 1 offenbart, beschreibt ein als Zahnstangenlenkung für ein Kraftfahrzeug ausgebildetes Lenksystem mit einer, in einem als Gehäuse ausgebildeten Gestell, axial verschiebbar geführten Zahnstange. In das Gehäuse ist ein drehfest mit einer Lenkhandhabe verbundenes Ritzel eingesetzt, wobei das Ritzel mit einer Verzahnung der Zahnstange kämmt. Das Ritzel bildet ein erstes und die Zahnstange ein zweites Getriebeglied. Ein in dem Gehäuse entlang einer Achse verschieblich angeordnetes Druckstück welches mit einem Federungselement beaufschlagt ist und auf den Rücken der Zahnstange wirkt, stellt eine Spielfreiheit zwischen dem Ritzel und der Verzahnung der Zahnstange sicher.

Zusätzlich ist ein Nachstelletement in Reihe mit dem Federungselement angeordnet und stellt eine Spielfreiheit der Anordnung von Druckstück und Federungselement her. Auf diese Weise ist eine Anpressvorrichtung dargestellt, welche Klappergeräusche in dem Gehäuse beim Betrieb des Lenksystems vermeidet. Die Anpressvorrichtung weist eine Vielzahl von Bauteilen auf und der Bauraum der Anpressvorrichtung ist nicht minimiert.

Der Erfindung liegt die Aufgabe zugrunde, eine Anpressvorrichtung für Getriebeglieder zu schaffen, die bei einfachem Aufbau einen geräuscharmen Betrieb der Getriebeglieder bei einer in engem Bereich variierenden Anpresskraft ermöglicht.

Die Aufgabe wird mit einer Anpressvorrichtung mit den Merkmalen des Anspruchs 1 gelöst.

Die Anpressvorrichtung weist ein Federungselement auf, das sowohl eine dauernde Beaufschlagung des Druckstücks mit einer in engem Bereich variierenden Federkraft ermöglicht, als auch eine ständige Anlage fester Bauteile zwischen dem Druckstück und dem Gestell in radialer Richtung der Getriebeglieder betrachtet, gewährleistet, wodurch ein Anschlagen der Bauteile der Anpressvorrichtung und eine Geräuschentwicklung vermieden ist. Anstatt eine Anpressvorrichtung mit mehreren Einrichtungen zur Nachstellung des Druckstücks und zur Beaufschlagung mit einer Federkraft vorzusehen, weist die Anpressvorrichtung ein Federungselement auf, das sowohl eine dauernde Beaufschlagung des Druckstücks mit einer in engem Bereich variierenden Federkraft ermöglicht, als auch eine selbst nachstellende Funktion hat.

Zu diesem Zweck ist das Federungselement in axialer Richtung der Achse des Druckstücks betrachtet zwischen dem Druckstück und einem Gestellbauteil an welchem das erste und zweite Getriebeglied gehalten ist, angeordnet. Das Federungselement besteht aus Wälzkörpern, die etwa quer zu der Achse des Druckstücks federbelastet sind und sich jeweils zumindest an einer Schrägfläche abstützen. Die Schrägfläche ist dabei jeweils schräg zu der Achse des Druckstücks mit sich radial zu der Achse hin öffnendem Winkel oder mit sich schräg von der Achse weg öffnendem Winkel ausgebildet. Entsprechend sind die Wälzkörper mit einer Feder in radialer Richtung von der Achse weg oder zu der Achse hin federbelastet und jeweils gegen die Schrägflächen gepresst. Insbesondere um eine Hysterese des Federungselementes zu minimieren ist eine weitere, als Druckfeder ausgebildete Feder zwischen dem Druckstück und dem Gestellbauteil angeordnet sein und das Druckstück und / oder die Feder, welche die Wälzkörper federbelastet, beaufschlagen.

Bevorzugte Ausführungen der Erfindung ergeben sich aus den Unteransprüchen.

Sind die Schrägflächen mit sich radial zu der Achse des Druckstücks hin sich öffnendem Winkel angeordnet, so ist es zweckmäßig, die Feder so anzuordnen, dass diese sich an jeweils diametral zu der Achse gegenüberliegenden Wälzkörpern abstützt und diese mit einer Federkraft beaufschlagt.

Die Schrägflächen gehen jeweils mit einem bogenförmigen Segment in eine etwa senkrecht zu der Achse des Druckstücks verlaufende ebene Fläche über. Das bogenförmige Segment weist einen größeren Radius als die sich an den Schrägflächen und der ebenen Fläche gleitenden und / oder abwälzenden Wälzkörpern auf. Die Schrägflächen können an dem Druckstück, an dessen, dem Gestellbauteil zugewandten Stirnfläche angeordnet sein. Es kann auch zweckmäßig sein, die Schrägflächen und die ebene Fläche in dem Gestellbauteil anzuordnen.

Das jeweilige Bauteil (Druckstück oder Gestellbauteil), welches dem die Schrägflächen tragenden Bauteil in axialer Richtung der Achse des Druckstücks gegenüber liegt, weist bevorzugt eine ebene Stirnfläche auf, auf welcher die Wälzkörper gleiten und / oder sich abwälzen. An der Stirnfläche können Radialanschläge für die Wälzkörper angeordnet sein. Die bogenförmigen Segmente bilden mit der gegenüberliegenden Fläche Radialanschläge für die Wälzkörper und damit einen Anschlag für das Druckstück.

Bevorzugt sind die Wälzkörper, zur Minimierung von Kosten als kugelförmige Bauteile oder Kugeln ausgebildet. Die in axialer Richtung auf das Druckstück oder die Feder wirkende Druckfeder kann eine größere Federkraft als die, die Wälzkörper federbelastende Feder aufweisen. Die Federkraft der Druckfeder beträgt bevorzugt bis etwa 20 N. Das Gestellbauteil, an dem sich das Federungselement abstützt, ist bevorzugt eine Stellschraube, die in axialer Richtung zu dem Druckstück verstellbar ist. Es kann zweckmäßig sein, anstatt der Stellschraube einen Deckel oder eine Traverse vorzusehen und den Deckel in dem Gestell formschlüssig, vorzugsweise durch Verstemmen, festzulegen. Um den Raum zwischen dem Druckstück und dem Deckel oder der Stellschraube zu entlüften, ist eine Bohrung in dem Druckstück vorgesehen, welche das Druckstück in axialer Richtung durchragt. Das Gestell, in dem das erste und das zweite Getriebeglied angeordnet sind, ist zweckmäßig äls vorzugsweise geschlossenes Getriebegehäuse ausgebildet.

Es kann zweckmäßig sein, anstatt der Stellschraube einen Deckel oder eine Traverse vorzusehen und den Deckel in dem Gestell formschlüssig, vorzugsweise durch Verstemmen, festzulegen. Das Gestell, in dem das erste und das zweite Getriebeglied angeordnet ist, ist zweckmäßig als vorzugsweise geschlossenes Getriebegehäuse ausgebildet.

Es ist zweckmäßig, das Druckstück auf ein radialverschieblich gelagertes Lager des ersten oder zweiten Getriebegliedes wirken zu lassen.

Durch das erfindungsgemäße Federungselement ist ein ständiger Kontakt fester, metallischer Bauteile bewirkt, wodurch Schlaggeräusche im Betrieb der Anpressvorrichtung vermieden sind. Eine in engen Grenzen variierende und vorgebbare Anpresskraft bei gleichzeitiger Möglichkeit selbsttätiger Nachstellung zum Zweck des Ausgleichs von Toleranzen durch Verschleiß oder Wärmedehnung ist mit der Anpressvorrichtung ermöglicht.

Ein Ausführungsbeispiel ist nachstehend anhand der Zeichnung gezeigt. In der Zeichnung zeigt:
Fig. 1 einen teilweisen Querschnitt durch ein Zahnstangen - Lenksystem im Bereich der Anpressvorrichtung,
Fig. 2 einen teilweisen Querschnitt durch ein Schneckengetriebe mit Anpressvorrichtung,
Fig. 3 einen Längsschnitt durch die Anpressvorrichtung in Fig. 2.
Fig. 4 einen Längsschnitt durch eine erfindungsgemäße Anpressvorrichtung mit einer Druckfeder.

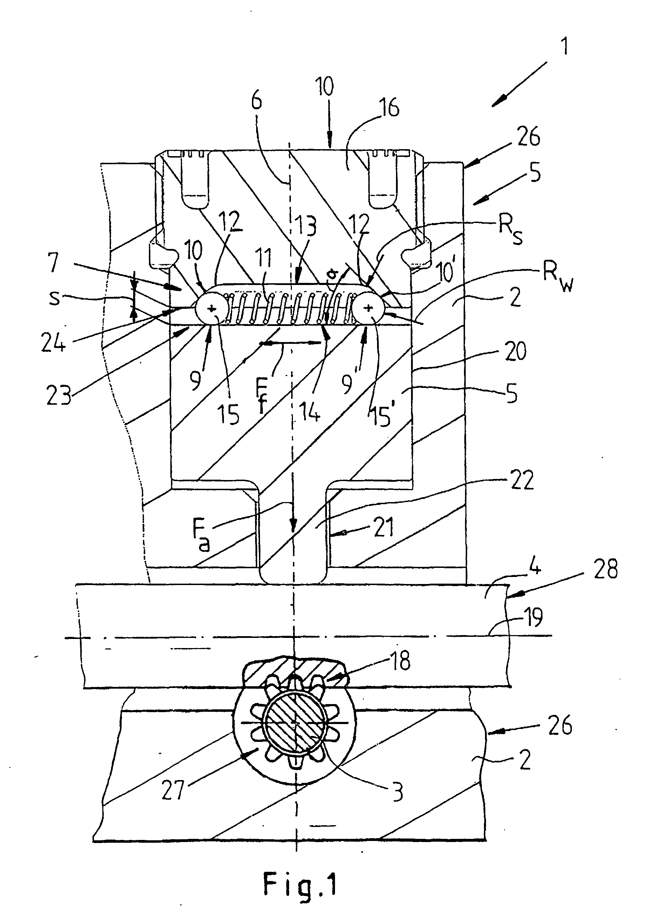

In Fig. 1 ist in einem Querschnitt teilweise ein Lenksystem, welches als Zahnstangenlenkung für ein Kraftfahrzeug ausgebildet ist, gezeigt. Ein als Getriebegehäuse 26 ausgebildetes Gestell 2 ist dabei in axialer Richtung zu einer Zahnstange 28 im Bereich einer Anpressvorrichtung 1 dargestellt. Die Zahnstange 28 trägt eine sich in axialer Richtung über die Zahnstange 28 erstreckende Verzahnung 18, die mit einem, am Ende einer Lenkwelle drehfest mit dieser verbundenen Ritzel 27 in Eingriff ist.

Das Ritzel 27 ist in nicht näher dargestellter Weise in dem Getriebegehäuse 26 drehbar gelagert und bildet ein erstes Getriebeglied 3. In Abhängigkeit von einer Drehung des Ritzels 27 an einer Lenkhandhabe an der Lenkwelle verschiebt sich die Zahnstange 28 in axialer Richtung. Die Zahnstange 28 bildet ein zweites Getriebeglied 4 und ist mit Spurstangen und Radlenkhebeln mit lenkbaren Rädern des Kraftfahrzeugs verbunden.

Die Verzahnung 18 der Zahnstange 28 wird mit Hilfe eines Druckstückes 5, welches entlang einer senkrecht zu der Längsachse 19 der Zahnstange 28 angeordneten Achse 6 axialverschieblich in dem Getriebegehäuse 26 angeordnet ist, gegen das Ritzel 27 gepresst. Das Druckstück 5 kann zylinder- oder kubusförmig gebildet sein und ist in einer Bohrung 20 des Getriebegehäuses 26 eingesetzt. Die Bohrung 20 weist in ihrem axialen, der Zahnstange 28 zugewandten Ende eine Öffnung 21 auf, durch die ein Druckstückende 22 ragt, welches gleitend auf der Zahnstange 28 aufliegt.

Ein Federungselement 7, welches in der Bohrung 20 eingesetzt ist, stützt sich an einem als ebene Fläche 14 ausgebildeten Boden 23 des Druckstückes 5 ab. In axialer Richtung der Achse 6 stützt sich das Federungselement 7 an einem als Stellschraube 16 ausgebildeten Gestellbauteil 10 ab.

Das Federungselement 7 ist aus zwei sich diametral zu der Achse 6 gegenüberliegenden, als Kugeln 15,15' ausgebildeten Wälzkörpern 8,8' gebildet. Zwischen den Wälzkörpern 8,8' ist eine als Schrauben-Druckfeder ausgebildete Feder 11 eingesetzt, wobei der Radius der Schrauben-Druckfeder und der Radius R_{w} der Wälzkör per 8,8' etwa gleich ist.

In eine Stirnfläche 24 der Stellschraube 16, welche dem Boden 23 des Druckstücks 5 mit Abstand s gegenüberliegt, ist eine kegelstumpfförmige Eindrehung eingebracht. Die Eindrehung weist im gezeigten Querschnitt sich jeweils mit einem radial zu der Achse 6 hin öffnenden Winkel α ausgebildete Schrägflächen 9,9' auf.

Die Schrägflächen 9,9' gehen, in radialer Richtung zu der Achse 6 betrachtet, mit je einem bogenförmigen Segment 12 in eine senkrecht zu der Achse 6 des Druckstücks 5 verlaufenden Fläche 13 über. Der Radius Rₛ der bogenförmigen Segmente 12 ist dabei größer als der Radius R_{w} der Wälzkörper 8,8' oder Kugeln 15,15'.

Die Tiefe der Eindrehung ist so gewählt, dass sie kleiner als der Durchmesser der Wälzkörper 8,8' ist. Dadurch ist bewirkt, dass das Druckstück 5 sich unabhängig von dem jeweiligen, im Betrieb des Lenksystems zurückgelegten Arbeitsweg, axial ausschließlich über die Wälzkörper 8,8' an der Stellschraube 16 abstützt.

Im Betrieb des Lenksystems wird die Zahnstange 28 und das Druckstück 5 durch Einleiten einer Lenkkraft auf das Ritzel 27 und / oder durch auf die Zahnstange 28 wirkende Rückstellkräfte von den lenkbaren Fahrzeugrädern durch den Verzahnungseingriffswinkel vom Ritzel 27 weggedrückt.

Die Kugeln 15,15' werden dadurch entgegen der Federkraft F_{f} der Feder 11 radial zu der Achse 6 gedrückt. Aufgrund der gewählten geometrischen Größen des Öffnungswinkels α der Schrägflächen 9,9' und dem Radius Rₛ der bogenförmigen Segmente 12, verändert sich das Verhältnis der Anpresskraft Fₐ des Druckstücks 5 zu der Federkraft F_{f} in Abhängigkeit von dem jeweiligen Berührpunkt der Wälzkörper 8,8' an den Flanken der Stellschrauben-Eindrehung, wobei die Anpresskraft Fₐ des Druckstücks 5 mit zunehmender Stauchung der Feder 11 ansteigt

Das Federungselement 7 ermöglicht eine ständige, stoßfreie Anlage des Druckstücks 5 über die Wälzkörper 8,8' an dem Getriebegehäuse 26, wodurch Klappergeräusche vermieden sind. Es sind dadurch Nachstellfunktion und Federfunktion in einem einzigen Federungselement vereint. Das Federungselement ist leicht zu montieren, baut klein und weist nur wenige Teile auf.

Weitere Ausführungsmöglichkeiten der Anpressvorrichtung 1, etwa mit sich radial von der Achse 6 des Druckstücks 5 weg öffnendem Schrägflächen-Winkel α, mit in Richtung auf die Achse 6 federbelasteten Wälzkörpern sind möglich. Es kann auch zweckmäßig sein, die Schrägflächen oder die kegelstumpfförmige Eindrehung anstatt in der Stellschraube oder einem Gestellbauteil in dem Druckstück anzuordnen.

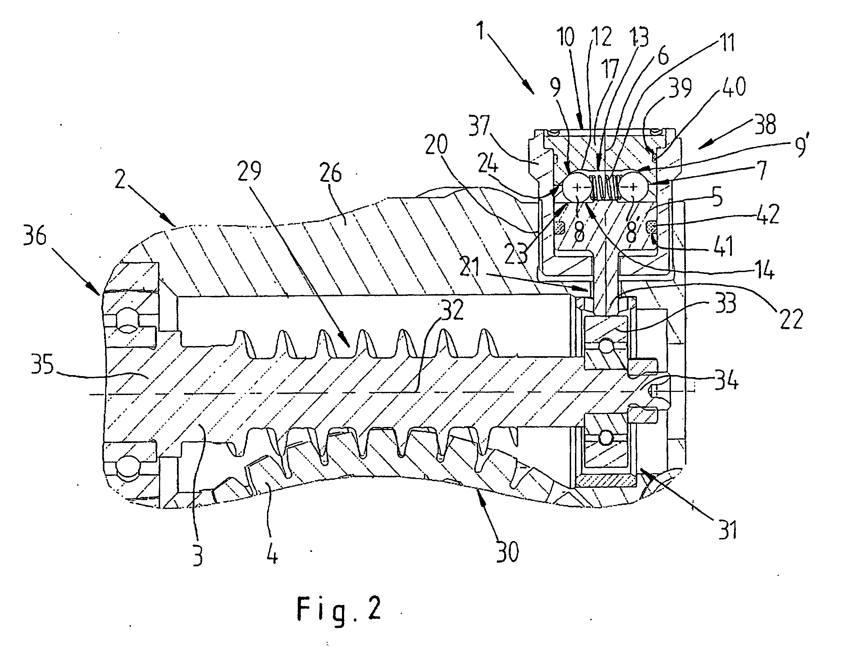

Die Anpressvorrichtung kann auch zu anderen Zwecken eingesetzt werden, wie etwa zur Anpressung eines als Schnecke 29 ausgebildeten ersten Getriebegliedes 3 gegen ein als Schneckenrad 30 ausgebildetes zweites Getriebeglied 4 und umgekehrt (vgl. Fig. 2). In Figur 2 ist in einem Querschnitt entlang einer Achse 32 einer Schecke 29 ein Schneckengetriebe gezeigt, das bevorzugt zur Kraftübertragung eines Servomotors bei einem Lenksäulenantrieb, einem Ritzelantrieb oder Doppelritzelantrieb einer elektrischen Servolenkung eingesetzt wird.

Die als ein erstes Getriebeglied 3 ausgebildete Schnecke 29 ist in einem als Getriebegehäuse 26 ausgebildeten Gestell 2 in einem radialverschieblichen Lager 33 gehalten. Das Lager 33 ist an dem axialen Ende 34 der Schnecke 29 angeordnet. Die Schnecke 29 ist an ihrem, dem axialen Ende 34 gegenüberliegenden Ende 35, in einem weiteren Lager 36, in dem Getriebegehäuse 26 gehalten. Das Lager 36 ist als schwenkbares Festlager ausgebildet. Die Schnecke 29 ist drehfest über eine Kupplung mit einem nicht gezeigten Servomotor verbunden und mit einem Schnekkenrad 30 in Eingriff. Das Schneckenrad 30 bildet als zweites Getriebeglied 4 die Abtriebsseite des Schneckengetriebes. Die Achse des Schneckenrades 30 ist in dem gezeigten Ausführungsbeispiel in senkrechter Richtung zu der Achse 32 der Schnecke 29 angeordnet.
Um Spielfreiheit im Verzahnungseingriff von Schnecke 29 und Schneckenrad 30 unabhängig von Verschleiß, von Wärmedehnung und dgl. im Betrieb des Schnekkengetriebes sicherzustellen, ist eine Anpressvorrichtung 1 in dem Getriebegehäuse 26 angeordnet.

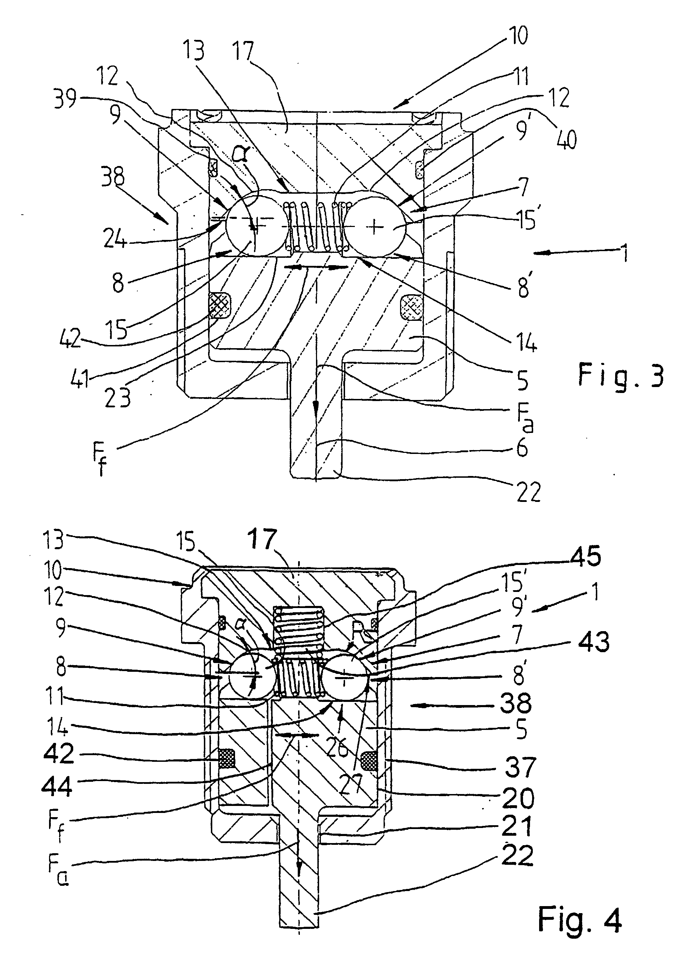

In Fig. 3 ist die Anpressvorrichtung 1 in einer vergrößerten Darstellung in einem Längsschnitt entlang einer Achse 6 eines Druckstücks 5 gezeigt. Für gleiche Bauteile gelten dieselben Bezugszeichen wie in Fig. 2. Das Druckstück 5 ist zylinderförmig gebildet und in einer Bohrung in dem Getriebegehäuse 26 eingesetzt. Entlang der Achse 6, welche in senkrechter Richtung zu der Achse 32 der Schnecke 29 und in senkrechter Richtung zu der Achse des Schneckenrades 30 gerichtet ist, ist das Druckstück 5 verschieblich in der Bohrung gehalten. Die Bohrung weist in ihrem axialen, der Schnecke 29 zugewandten Ende, eine Öffnung 21 auf, durch die ein Druckstückende 22 ragt. Das Druckstückende 22 und die Öffnung 21 haben einen kleineren Durchmesser oder lichte Weite, wie das Druckstück 5 selbst. Das Druckstückende 22 kann auf ein Lager 31 des ersten oder zweiten Getriebegliedes wirken und wirkt in dem gezeigten Ausführungsbeispiel auf das Lager 33 und presst die Schnecke 29 in radialer Richtung ihrer Achse 32 zu dem Schneckenrad 30 hin. Zu diesem Zweck ist ein Federungselement 7, welches in der Bohrung angeordnet ist, vorgesehen. Das Federungselement 7 stützt sich an einem als ebene Fläche 14 - oder wie in den Figuren 2 und 3 gezeigt - an einer, quer zu der Achse 6 betrachtet, als zylinderförmige Fläche ausgebildeten Boden 23 des Druckstücks 5 ab. In axialer Richtung der Achse 6 betrachtet stützt sich das Federungselement 7 an einem als Deckel 17 ausgebildeten Gestellbauteil 10 ab.

Das Federungselement 7 ist aus zwei sich diametral zu der Achse 6 gegenüberliegenden, als Kugeln 15,15' ausgebildeten Wälzkörpern 8,8' gebildet. Zwischen den Wälzkörpern 8,8' ist eine als Schrauben-Druckfeder ausgebildete Feder 11 eingesetzt, wobei der Radius der Feder kleiner als der Radius R_{w} der Wälzkörper 8,8' ist.

Die Feder 11 und die Kugeln 15,15' sind in einer halboffenen Bohrung geführt. In eine Stirnfläche 24 des Deckels 17 ist eine kegelstumpfförmige Eindrehung eingebracht. Die Eindrehung weist im gezeigten Querschnitt sich jeweils mit einem radial zu der Achse 6 hin öffnenden Winkel α ausgebildete Schrägflächen 9,9' auf. Die Schrägflächen 9,9' gehen, in radialer Richtung zu der Achse 6 des Druckstücks 5 betrachtet, mit je einem bogenförmigen Segment 12 in eine senkrecht zu der Achse 6 des Druckstücks 5 verlaufende Fläche 13 über. Der Radius Rₛ der bogenförmigen Segmente 12 ist dabei größer als der Radius R_{w} der Wälzkörper 8,8' oder Kugeln 15,15'.
Die Teile sind so dimensioniert, dass das Druckstück 5 sich unabhängig von dem jeweiligen, im Betrieb der Anpressvorrichtung 1 zurückgelegten Arbeitsweg, axial ausschließlich über die Wälzkörper 8,8' an dem Deckel 17 abstützt. Um Reibung zwischen den Wälzkörpern 8,8', dem Deckel 17 und dem Druckstück 5 und die damit verbundene Hysterese im Bewegungsablauf des Druckstückes 5 zu verringern, ist eine auf das Druckstück 5 wirkende Druckfeder 43 vorgesehen sein. Wie Fig. 4 zeigt, ist die Druckfeder in einer Sackbohrung 45 des Deckels 17 im Bereich dessen Fläche 13 angeordnet. Die als zylindrische Schrauben-Druckfeder gebildete Druckfeder 43 hat eine Federkraft, die größer ist als diejenige der Feder 11. Die Druckfeder 43 bewirkt damit den Hauptteil der Anpresskraft Fₐ des Druckstückes 5.

Im Betrieb des Lenksystems wird die Schnecke 29 und das Druckstück 5 durch Einleiten eines Motordrehmoments auf die Schnecke 29 und / oder auf das Schnekkenrad 30 wirkende Rückstellkräfte von den lenkbaren Fahrzeugrädem durch den Verzahnungseingriffswinkel vom Schneckenrad 30 weggedrückt.

Die Kugeln 15,15' werden dadurch entgegen der Federkraft F_{f} der Feder 11 radial zu der Achse 6 gedrückt. Aufgrund der gewählten geometrischen Größen des Öffnungswinkels α der Schrägflächen 9,9' und dem Radius Rₛ der bogenförmigen Segmente 12, verändert sich das Verhältnis der Anpresskraft Fₐ des Druckstücks 5 zu der Federkraft F_{f} in Abhängigkeit von dem jeweiligen Berührpunkt der Wälzkörper 8,8' an den Flanken der Deckel-Eindrehung, wobei die Anpresskraft Fₐ des Druckstücks 5 mit zunehmender Stauchung der Feder 11 ansteigt. Im Bereich des bogenförmigen Segments 12 steigt die Anpresskraft Fₐ steil jedoch ohne Sprung stoßfrei an.

Das Federungselement 7 ermöglicht eine ständige, stoßfreie Anlage des Druckstücks 5 über die Wälzkörper 8,8' an dem Getriebegehäuse 26, wodurch Klappergeräusche vermieden sind. Es sind dadurch Nachstellfunktion und Federfunktion in einem einzigen Federungselement vereint. Das Federungselement ist leicht zu montieren, baut klein und weist nur wenige Teile auf.

In dem gezeigten Ausführungsbeispiel ist der Deckel 17 mit einem Gehäuse 37, das das Druckstück 5, das Federungselement 7 und den Deckel 17 zu einer Einheit, einer Druckstückbaugruppe 38, zusammenfaßt, verstemmt. Der Deckel 17 ist über einen in einer Umfangsnut 39 des Deckels 17 eingesetzten O-Ring 40 gegen das Gehäuse 37 abgedichtet. Das axialverschieblich in dem Gehäuse 37 gehaltene Druckstück 5 ist wahlweise mit einem in eine Umfangsnut 41 in dem Druckstück 5 eingesetzten O-Ring 42, der auch zur Dämpfung dient, gegen das Gehäuse 37 abgedichtet. Wie in Fig. 4 gezeigt ist, ist eine Bohrung 44 axial durch das Druckstück geführt. Die Bohrung 44 dient zur Entlüftung des Raumes zwischen dem Deckel 16 und dem Druckstück 5.

In dem in den Figuren 2 und 3 gezeigten Ausführungsbeispiel ist das Gehäuse 37 zylinderförmig ausgebildet und in das Getriebegehäuse dichtend eingeschraubt. Es kann auch zweckmäßig sein, das Druckstück auf ein Lager des Schneckenrades 30 wirken zu lassen. Anstatt der Anwendung der erfindungsgemäßen Anpressvorrichtung 1 zur Anpressung von sich in formschlüssigem Eingriff befindlichen Getriebegliedern, kann die Anpressvorrichtung auch bei reibschlüssig in Eingriff befindlichen Getriebegliedern angewandt werden.

## Patentansprüche

1. Anpressvorrichtung, insbesondere zum Aneinanderpressen eines ersten Getriebegliedes (3) und eines zweiten Getriebegliedes (4) in einem Wälzkurvengetriebe eines Lenksystems, mit einem Gestell (2) und einem Druckstück (5), welches an dem Gestell (2) entlang einer Achse (6) verschiebbar gelagert ist, wobei ein Federungselement (7) auf das Druckstück (5) wirkt, **dadurch gekennzeichnet, dass** das Federungselement (7) aus Wälzkörpern (8,8') gebildet ist, die etwa quer zu der Achse (6) des Druckstücks (5) federbelastet sind und sich an Schrägflächen (9,9') zwischen dem Druckstück (5) und einem Gestellbauteil (10) abstützen und dass das Druckstück (5) von einer Druckfeder (43) in Richtung der Achse (6) federbelastet ist.

2. Anpressvorrichtung nach Anspruch 1, **dadurch gekennzeichnet, dass** die Schrägflächen (9,9') mit sich radial zu der Achse (6) des Druckstücks (5) hin öffnendem Winkel (α) ausgebildet sind und die Wälzkörper (8,8') von einer Feder (11) in Richtung von der Achse (6) des Druckstücks (5) weg radial federbelastet sind.

3. Anpressvorrichtung nach Anspruch 2, **dadurch gekennzeichnet, dass** die Feder (11) sich jeweils zwischen zwei Wälzkörpern (8,8') erstreckt.

4. Anpressvorrichtung nach Anspruche 1, **dadurch gekennzeichnet, dass** die Schrägflächen (9,9') mit sich radial von der Achse (6) des Druckstücks (5) weg öffnendem Winkel (α) ausgebildet sind und die Wälzkörper (8,8') jeweils von einer Feder (11) in Richtung auf die Achse (6) des Druckstücks (5) hin radial federbelastet sind.

5. Anpressvorrichtung nach einem der Ansprüche 1 bis 4, **dadurch gekennzeichnet, dass** die Schrägflächen (9,9') mit einem bogenförmigen Segment (12) mit einem Radius (Rₛ) in eine etwa senkrecht zu der Achse (6) des Druckstücks (5) verlaufenden Fläche (13) übergehen.

6. Anpressvorrichtung nach Anspruch 5, **dadurch gekennzeichnet, dass** der Radius (Rₛ) des bogenförmigen Segmentes (12) größer als der Radius (R_{w}) der Wälzkörper (8,8') ist.

7. Anpressvorrichtung nach einem der Ansprüche 1 bis 6, **dadurch gekennzeichnet, dass** die Schrägflächen (9,9') in dem Druckstück (5) angeordnet sind.

8. Anpressvorrichtung nach einem der Ansprüche 1 bis 7, **dadurch gekennzeichnet, dass** die Schrägflächen (9,9') in dem Gestellbauteil (10) angeordnet sind.

9. Anpressvorrichtung nach einem der Ansprüche 1 bis 8, **dadurch gekennzeichnet, dass** den Schrägflächen (9,9') in axialer Richtung der Achse (6) des Druckstücks (5) betrachtet, eine ebene Fläche (14) oder, quer zu der Achse (6) betrachtet, zylinderförmige Fläche gegenüberliegt.

10. Anpressvorrichtung nach einem der Ansprüche 1 bis 9, **dadurch gekennzeichnet, dass** die Wälzkörper (8,8') Kugeln (15,15') sind.

11. Anpressvorrichtung nach einem der Ansprüche 1 bis 10, **dadurch gekennzeichnet, dass** die Druckfeder (43) eine größere Federkraft als die, die Wälzkörper (8,8') belastende Feder (11) aufweist.

12. Anpressvorrichtung nach einem der Ansprüche 1 bis 11, **dadurch gekennzeichnet, dass** die Federkraft der Druckfeder (43) kleiner als 20 N ist.

13. Anpressvorrichtung nach einem der Ansprüche 1 bis 12, **dadurch gekennzeichnet, dass** das Gestellbauteil (10) eine Stellschraube (16) ist.

14. Anpressvorrichtung nach einem der Ansprüche 1 bis 13, **dadurch gekennzeichnet, dass** das Gestellbauteil (10) ein Deckel (17) ist, der in dem Gestell (2) festgelegt, vorzugsweise verstemmt ist.

15. Anpressvorrichtung nach einem der Ansprüche 13 oder 14, **dadurch gekennzeichnet, dass** das Druckstück (5) von einer Bohrung (44) in axialer Richtung durchragt ist.

16. Anpressvorrichtung nach einem der Ansprüche 1 bis 15, **dadurch gekennzeichnet, dass** das Gestell (2) ein Getriebegehäuse (26) ist.

17. Anpressvorrichtung nach einem der Ansprüche 1 bis 16, **dadurch gekennzeichnet, dass** das erste Getriebeglied (3) eine Schnecke (29) und das zweite Getriebeglied (4) ein Schneckenrad (30) ist.

18. Anpressvorrichtung nach einem der Ansprüche 1 bis 14, **dadurch gekennzeichnet, dass** das Druckstück (5) auf ein Lager (31) des ersten und / oder zweiten Getriebegliedes (3,4) wirkt.

19. Anpressvorrichtung nach einem der Ansprüche 1 bis 18, **dadurch gekennzeichnet, dass** das Druckstück (5), das Federungselement (7), die Druckfeder (43) und das Gestellbauteil (10) in einem Gehäuse (37) als Druckstückbaugruppe (38) zusammengefasst sind.

20. Anpressvorrichtung nach einem der Ansprüche 1 bis 19, **dadurch gekennzeichnet, dass** das erste Getriebeglied (3) ein Ritzel (27) und das zweite Getriebeglied (4) eine Zahnstange (28) ist.

## Claims

1. Thrust device, in particular for pressing a first mechanism member (3) and a second mechanism member (4) against one another in a roller cam mechanism of a steering system, having a frame (2) and a pressure piece (5) which is mounted on the frame (2) so as to be displaceable along an axis (6), a spring element (7) acting on the pressure piece (5), **characterized in that** the spring element (7) is formed from rolling bodies (8, 8') which are spring loaded approximately transversely with respect to the axis (6) of the pressure piece (5) and are supported on oblique surfaces (9, 9') between the pressure piece (5) and a frame part (10), and **in that** the pressure piece (5) is spring loaded by a compression spring (43) in the direction of the axis (6).

2. Thrust device according to Claim 1, **characterized in that** the oblique surfaces (9, 9') are configured with an angle (α) which opens radially toward the axis (6) of the pressure piece (5), and the rolling bodies (8, 8') are spring loaded by a spring (11) radially in the direction away from the axis (6) of the pressure piece (5).

3. Thrust device according to Claim 2, **characterized in that** the spring (11) extends in each case between two rolling bodies (8, 8').

4. Thrust device according to Claim 1, **characterized in that** the oblique surfaces (9, 9') are configured with an angle (α) which opens radially away from the axis (6) of the pressure piece (5), and the rolling bodies (8, 8') are in each case spring loaded by a spring (11) radially in the direction toward the axis (6) of the pressure piece (5).

5. Thrust device according to one of Claims 1 to 4, **characterized in that** the oblique surfaces (9, 9') merge with an arcuate segment (12) having a radius (Rₛ) into a surface (13) which extends approximately perpendicularly with respect to the axis (6) of the pressure piece (5).

6. Thrust device according to Claim 5, **characterized in that** the radius (Rₛ) of the arcuate segment (12) is larger than the radius (R_{w}) of the rolling bodies (8, 8').

7. Thrust device according to one of Claims 1 to 6, **characterized in that** the oblique surfaces (9, 9') are arranged in the pressure piece (5).

8. Thrust device according to one of Claims 1 to 7, **characterized in that** the oblique surfaces (9, 9') are arranged in the frame part (10).

9. Thrust device according to one of Claims 1 to 8, **characterized in that**, as viewed in the axial direction of the axis (6) of the pressure piece (5), a flat surface (14) or, as viewed transversely with respect to the axis (6), a cylindrical surface lies opposite the oblique surfaces (9, 9').

10. Thrust device according to one of Claims 1 to 9, **characterized in that** the rolling bodies (8, 8') are balls (15, 15').

11. Thrust device according to one of Claims 1 to 10, **characterized in that** the compression spring (43) has a greater spring force than the spring (11) which loads the rolling bodies (8, 8').

12. Thrust device according to one of Claims 1 to 11, **characterized in that** the spring force of the compression spring (43) is less than 20 N.

13. Thrust device according to one of Claims 1 to 12, **characterized in that** the frame part (10) is a setting screw (16).

14. The thrust device according to one of Claims 1 to 13, **characterized in that** the frame part (10) is a cover (17) which is positioned fixedly, preferably calked, in the frame (2).

15. Thrust device according to either of Claims 13 and 14, **characterized in that** the pressure piece (5) is penetrated by a hole (44) in the axial direction.

16. Thrust device according to one of Claims 1 to 15, **characterized in that** the frame (2) is a mechanism casing (26).

17. Thrust device according to one of Claims 1 to 16, **characterized in that** the first mechanism member (3) is a worm (29) and the second mechanism member (4) is a worm gear (30).

18. Thrust device according to one of Claims 1 to 14, **characterized in that** the pressure piece (5) acts on a bearing (31) of the first and/or second mechanism member (3, 4).

19. Thrust device according to one of Claims 1 to 15, **characterized in that** the pressure piece (5), the spring element (7), the compression spring (43) and the frame part (10) are combined in a casing (37) as a pressure piece assembly (38).

20. Thrust device according to one of Claims 1 to 19, **characterized in that** the first mechanism member (3) is a pinion (27) and the second mechanism member (4) is a rack (28).

## Revendications

1. Dispositif de pression, notamment pour presser l'un contre l'autre un premier organe d'engrenage (3) et un deuxième organe d'engrenage (4) dans une transmission par cames à rouleaux d'un système de direction, comprenant un bâti (2) et une pièce de pression (5), qui est montée de manière à pouvoir coulisser sur le bâti (2) le long d'un axe (6), dans lequel un élément de suspension (7) agit sur la pièce de pression (5), **caractérisé en ce que** l'élément de suspension (7) est formé de corps de rouleaux (8, 8') qui sont sollicités par ressort approximativement transversalement à l'axe (6) de la pièce de pression (5) et qui s'appuient sur des faces obliques (9, 9') entre la pièce de pression (5) et un composant du bâti (10) et **en ce que** la pièce de pression (5) est sollicitée par ressort par un ressort de pression (43) dans la direction de l'axe (6).

2. Dispositif de pression selon la revendication 1, **caractérisé en ce que** les faces obliques (9, 9') sont réalisées avec un angle (α) s'ouvrant radialement vers l'axe (6) de la pièce de pression (5) et les corps de rouleaux (8, 8') sont sollicités par ressort radialement par un ressort (11) dans la direction à l'écart de l'axe (6) de la pièce de pression (5).

3. Dispositif de pression selon la revendication 2, **caractérisé en ce que** le ressort (11) s'étend à chaque fois entre deux corps de rouleaux (8, 8').

4. Dispositif de pression selon la revendication 1, **caractérisé en ce que** les faces obliques (9, 9') sont réalisées avec un angle (α) s'ouvrant radialement à l'écart de l'axe (6) de la pièce de pression (5) et les corps de rouleaux (8, 8') sont sollicités par ressort radialement par un ressort (11) dans la direction de l'axe (6) de la pièce de pression (5).

5. Dispositif de pression selon l'une quelconque des revendications 1 à 4, **caractérisé en ce que** les faces obliques (9, 9') se prolongent avec un segment en forme d'arc (12) ayant un rayon (Rₛ) par une surface (13) s'étendant approximativement perpendiculairement à l'axe (6) de la pièce de pression (5).

6. Dispositif de pression selon la revendication 5, **caractérisé en ce que** le rayon (Rₛ) du segment en forme d'arc (12) est plus grand que le rayon (R_{w}) des corps de rouleaux (8, 8').

7. Dispositif de pression selon l'une quelconque des revendications 1 à 6, **caractérisé en ce que** les faces obliques (9, 9') sont disposées dans la pièce de pression (5).

8. Dispositif de presssion selon l'une quelconque des revendications 1 à 7, **caractérisé en ce que** les faces obliques (9, 9') sont disposées dans le composant du bâti (10).

9. Dispositif de pression selon l'une quelconque des revendications 1 à 8, **caractérisé en ce que**, considéré dans la direction axiale de l'axe (6) de la pièce de pression (5), une surface plane (14) est en regard des faces obliques (9, 9'), ou, considéré transversalement à l'axe (6), une surface cylindrique est en regard des faces obliques (9, 9').

10. Dispositif de pression selon l'une quelconque des revendications 1 à 9, **caractérisé en ce que** les corps de rouleaux (8, 8') sont des billes (15, 15').

11. Dispositif de pression selon l'une quelconque des revendications 1 à 10, **caractérisé en ce que** le ressort de pression (13) présente une plus grande force de ressort que le ressort (11) sollicitant les corps de rouleaux (8, 8').

12. Dispositif de pression selon l'une quelconque des revendications 1 à 11, **caractérisé en ce que** la force de ressort du ressort de pression (43) est inférieure à 20 N.

13. Dispositif de pression selon l'une quelconque des revendications 1 à 12, **caractérisé en ce que** le composant du bâti (10) est une vis de réglage (16).

14. Dispositif de pression selon l'une quelconque des revendications 1 à 13, **caractérisé en ce que** le composant du bâti (10) est un couvercle (17), qui est fixé dans le bâti (2), de préférence par matage.

15. Dispositif de pression selon l'une quelconque des revendications 13 ou 14, **caractérisé en ce que** la pièce de pression (5) est traversée dans la direction axiale par un alésage (44).

16. Dispositif de pression selon l'une quelconque des revendications 1 à 15, **caractérisé en ce que** le bâti (2) est un boîtier de transmission (26).

17. Dispositif de pression selon l'une quelconque des revendications 1 à 16, **caractérisé en ce que** le premier organe d'engrenage (3) est une vis sans fin (29) et le deuxième organe d'engrenage (4) est une roue à denture hélicoïdale (30).

18. Dispositif de pression selon l'une quelconque des revendications 1 à 14, **caractérisé en ce que** la pièce de pression (5) agit sur un palier (31) du premier et/ou du deuxième organe d'engrenage (3, 4).

19. Dispositif de pression selon l'une quelconque des revendications 1 à 18, **caractérisé en ce que** la pièce de pression (5), l'élément de suspension (7), le ressort de pression (43) et le composant du bâti (10) sont rassemblés sous forme de module de pièce de pression (38) dans un boîtier (37).

20. Dispositif de pression selon l'une quelconque des revendications 1 à 19, **caractérisé en ce que** le premier organe d'engrenage (3) est un pignon (27) et le deuxième organe d'engrenage (4) est une crémaillère (28).
